# EUROPEAN PATENT APPLICATION

(11) **EP 1 418 540 A2**
(43) Date of publication of application: **12.05.2004**
(21) Application number: 03256159.9
(22) Date of filing: 30.09.2003
(51) Int. Cl.: G06N 3/04

(54) **Physics based neural network for isolating faults**

(30) Priority: 30.09.2002 US 261265
(71) Applicant: UNITED TECHNOLOGIES CORPORATION, Hartford, Connecticut 06101 (US)
(72) Inventor: Depold, Hans R., Bolton, Connecticut 06043 (US); Sirag, David J., Ellington, Connecticut 06029 (US)
(74) Representative: Power, Philippa Louise

(57) **Abstract**

A PBNN for isolating faults in a plurality of components forming a physical system comprising a plurality of input nodes each input node comprising a plurality of inputs comprising a measurement of the physical system, and an input transfer function comprising a hyperplane representation of at least one fault for converting the at least one input into a first layer output, a plurality of hidden layer nodes each receiving at least one first layer output and comprising a hidden transfer function for converting the at least one of at least one first layer output into a hidden layer output comprising a root sum square of a plurality of distances of at least one of the at least one first layer outputs, and a plurality of output nodes each receiving at least one of the at least one hidden layer outputs and comprising an output transfer function for converting the at least one hidden layer outputs into an output.

## Description

### BACKGROUND OF THE INVENTION

### (1) Field of the Invention

The present invention relates to a physics based neural network (PBNN) for faults in physical systems. More specifically, the present invention relates to a PBNN for identifying the cause of a singular event caused by independent external or internal systems or interrelated combinations such as a propagating fault within a module or between modules.

### (2) Description of Related Art

Fault isolation, whereby a plurality of inputs representing components of a physical system are examined to detect failures of the system components, has usually been done manually using "fingerprint" charts, as well as manually with excel spreadsheets that use influence coefficients, with neural networks trained on examples of faults, and with Kalman filters. Spreadsheet solutions are the easiest to set up but do not rigorously handle data accuracy and are not easily automated.
It is necessary to first generate the signatures of the separate faults to train neural networks to recognize faults. In addition, neural networks require event data and are produced in reaction to events not proactively to detect the early stages of events. Typical Kalman Filters typically are configured as multiple fault detectors and therefore are not accurate for separating out rapid changes in single faults involving just one or two components, or particular sections of one component. As a result Kalman Filters and neural networks are adept at selecting the most probable causes of system faults but cannot determine with confidence the individual component contributing to a system fault.

What is therefore needed is an automated system for identifying the cause of a single event that is caused by independent external or internal system or interrelated combinations such as a propagating fault within a module or between modules.

### SUMMARY OF THE INVENTION

Accordingly, it is an object of the present invention to provide a PBNN for identifying the cause of a singular event caused by independent external or internal systems or interrelated combinations such as a propagating fault within a module or between modules.

In accordance with the present invention, a PBNN for isolating faults in a plurality of components forming a physical system comprises a plurality of input nodes each input node comprising a plurality of inputs comprising a measurement of the physical system, and an input transfer function comprising a hyperplane representation of at least one fault for converting the at least one input into a first layer output, a plurality of hidden layer nodes each receiving at least one first layer output and comprising a hidden layer transfer function for converting the at least one of at least one first layer output into a hidden layer output comprising a root sum square of a plurality of distances of at least one of the at least one first layer outputs, and a plurality of output nodes each receiving at least one of the at least one hidden layer outputs and comprising an output transfer function for converting the at least one hidden layer outputs into an output.

### BRIEF DESCRIPTION OF THE DRAWINGS

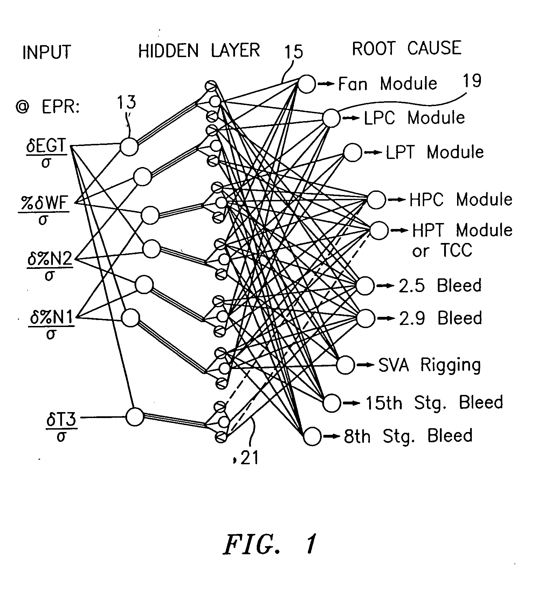

FIG. 1 - A diagram of the PBNN of the present invention.

### DETAILED DESCRIPTION OF THE PREFERRED EMBODIMENT(S)

It is the central purpose of this invention to provide a physics based neural network (PBNN) for identifying the cause of a single event that is caused by independent external or internal systems or interrelated combinations such as a propagating fault within a module or between modules.

PBNNs, as will be described more fully below, provide efficient computational mechanisms for the identification, representation, and solution of physical systems based on a partial understanding of the physics and without the need for extensive experimental data. Therefore, PBNNs form quasi-neural networks which recognize the fractal nature of real neural networks. As used herein "fractal" relates to the property of PBNNs scale up and down the concepts embedded within them. Scaling down is the process whereby individual neural functions are tailored using domain knowledge to create fully structured but partially understood processes that can be trained. Scaling up is the process whereby whole heuristic or computational processes are configured in a neural network and trained without the need for extensive experimental data.

A PBNN is a network of nodes, each of which consists of a set of inputs, a single output, and a transfer function between them. A single PBNN node is defined by specifying its transfer function and designating the outputs of other PBNN nodes as its input quantities. Processing through the node consists of collecting the input quantities, evaluating the transfer function, and setting the output to the result. The transfer function can consist of a connected collection of other PBNNs (called internal nodes) or any other mathematical relationship defined between the input and output values.

Internal nodes in a PBNN network can be other PBNN networks. Assembling a PBNN network for a given problem is done by decomposing its defined set of mathematical equations into a collection of nodes. Complex functions can then be decomposed of collections of more elementary functions, down to a reasonably low level of definition. Elementary PBNN nodes have been used to represent simple mathematical operations like sums or products, exponentials, and elementary trigonometric functions. Since a PBNN node in one network can consist of a complete network itself, the internal transfer function can become as complex as desired.

One interesting type of elementary PBNN node is the "parameter" node, where the underlying transfer function simply sets a constant output regardless of input. These nodes are used to represent parameters in a computation. They can be, however, designated as adaptive, and thereby tuned to a given problem.

A complete PBNN network is built from a set of PBNN nodes, with the internal connectivity defined by the underlying model. Once the individual nodes are defined and connected as desired, the user then selects which nodes will represent "output" quantities in the overall calculation. Additional nodes are designated as "training" quantities, which are modified as the network is tuned to a given problem. Finally, a set of nodes is designated as "input" nodes, whose values are set externally during each processing run. The collection of PBNN networks, input node set, training node set, and output node set, makes up a complete PBNN.

PBNN networks are run in two stages. The first, training stage, consists of presenting a known set of inputs and outputs to the PBNN network, and adjusting the training nodes to minimize the resulting error. This can be done in a variety of ways including, but not limited to, varieties of the backpropagation algorithm used in traditional neural networks, conjugate gradient methods, genetic algorithms, and the Alopex algorithm.

With reference to Fig. 1, there is illustrated a PBNN of the present invention configured to detect faults in an engine. While illustrated with reference to an engine system, the present invention is drawn broadly to include any physical system which can be modeled by a PBNN. The first layer of neurons 13 is embedded with the domain knowledge efficiency and flow influence coefficients for the parameter changes that occur for every individual fault or combination of faults that is anticipated as possible. It can include the individual influence coefficients for each module, desired portion of a module, or for specific combinations of modules to be monitored. In the example illustrated herein, inputs are formed from percent changes in a plurality of system measurements comprised of readings for engine temperature (EGT), fuel flow (WF), high rotor speed (N2), low rotor speed (N1), and compressor temperature (T3). Therefore each of the first layer's nodes is a hyperplane representation of the fault or combination of faults to be detected. Each parameter is normalized with its own standard deviation before being compared with each hyperplane. The root sum square of the distances (Gausian distance) of the parameters from each hyperspace forms the non-dimensional error term outputted by hidden layer of nodes 15 to the output layer nodes 19 of the PBNN. Each output layer node 19 represents the classification for one of each of the original events selected for isolation. The smallest total error represents the best overall match of the event. In this PBNN 1 the output neurons are not trained to fire above a certain predefined threshold. In this PBNN each output neuron's level reflects the classification error, therefore lower is better.

In the present example, there are illustrated ten individual engine modules being monitored for the presence of faults by output layer nodes 19. When the output of one such output layer node 19 exceeds the predefined threshold for the node, the node's output indicates the presence of a fault.

While the weights 21 leading to the output layer can then be trained or optimized to better separate the events as is done with vector machines, in a preferred embodiment, it is better to not optimize the weights 21 for two reasons.

First, the error terms computed at the output nodes are related to the accuracy of the output decision and to the ambiguity inherent in the classification. The lower the error term the more closely the solution matches the pattern within the data. But the closer the error term becomes between two output solutions, the more ambiguous the solution is. Training the output to separate and distinguish between solutions can hide ambiguity and therefore can be misleading.

Second, the closeness of the classification pattern match is important additional information for the next process which for example could be the selecting of a specific order of maintenance actions. The maintenance decision usually inversely weights the probability that the classification is correct with the cost of the maintenance action. Therefore it is best to keep the error terms as pure as possible. The PBNN provides the hierarchy of possible causes and the measure of confidence in each possible cause.

It is apparent that there has been provided in accordance with the present invention a PBNN for identifying the cause of a singular event caused by independent external or internal systems or interrelated combinations such as a propagating fault within a module or between modules. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. A PBNN for isolating faults in a plurality of components forming:
a physical system comprising:
a plurality of input nodes each input node comprising:
a plurality of inputs comprising a measurement of said physical system; and
an input transfer function comprising a hyperplane representation of at least one fault for converting said at least one input into a first layer output;
a plurality of hidden layer nodes each receiving at least one first layer output and comprising a hidden transfer function for converting said at least one of at least one first layer output into a hidden layer output comprising a root sum square of a plurality of distances of at least one of said at least one first layer outputs; and
a plurality of output nodes each receiving at least one of said at least one hidden layer outputs and comprising an output transfer function for converting said at least one hidden layer outputs into an output.

2. The PBNN of claim 1 wherein each of said input transfer functions comprise a domain knowledge efficiency and a flow influence coefficient.

3. The PBNN of claim 1 wherein each of said plurality of measurements is comprised of a percent change.

4. The PBNN of claim 3 wherein each of said measurements is normalized with a standard deviation of said measurements.

5. The PBNN of claim 1 wherein each of said plurality of output nodes further comprises at least one weight each associated with one of said at least one hidden layer outputs.

6. The PBNN of claim 5, wherein said at least one weight is altered to a value sufficient to provide increased functionality.
